# EUROPÄISCHE PATENTSCHRIFT

(11) **EP 2 595 854 B1**
(45) Veröffentlichungstag und Bekanntmachung des Hinweises auf die Patenterteilung: **18.06.2014**
(21) Anmeldenummer: 11735788.9
(22) Anmeldetag: 04.07.2011
(51) Int. Cl.: B62D 3/12, B62D 5/04

(54) **DOPPELRITZEL-LENKGETRIEBE**
DOUBLE PINION STEERING GEAR
LEVIER DE DIRECTION À DOUBLE PIGNON

(30) Priorität: 19.07.2010 DE 102010027553
(43) Veröffentlichungstag der Anmeldung: 29.05.2013
(73) Patentinhaber: ThyssenKrupp Presta AG, 9492 Eschen (LI)
(72) Erfinder: BILMAYER, Roman, FL-9493 Mauren (LI); ECKSTEIN, Ralf, A-6800 Feldkirch (AT); BÜCHEL, Rinaldo, CH-7023 Haldenstein (CH); REISACHER, Steffen, 72639 Neuffen (DE); HÄUSSLER, Bernd, 89081 Ulm (DE); VOHWINKEL, Kai, 73262 Reichenbach (DE)
(74) Vertreter: Lenzing Gerber Stute
(86) Internationale Anmeldenummer: PCT/EP2011/003303
(87) Internationale Veröffentlichungsnummer: WO 2012/010255

(56) Entgegenhaltungen:
- DE-A1- 10 341 266
- DE-C1- 4 446 482
- JP-A- 58 110 373
- ANONYMOUS: "Second pinion assist for electric power steering", RESEARCH DISCLOSURE, MASON PUBLICATIONS, HAMPSHIRE, GB, Bd. 354, Nr. 25, 1. Oktober 1993 (1993-10-01), XP007119361, ISSN: 0374-4353

## Beschreibung

Die vorliegende Erfindung betrifft ein Lenkgetriebe für Kraftfahrzeuge mit den Merkmalen des Oberbegriffs des Anspruchs 1.

Elektrisch unterstützte Lenkgetriebe für Kraftfahrzeuge lassen sich derzeit in zwei Gruppen unterteilen. Die erste Gruppe enthält diejenigen Lenkgetriebe, bei denen sowohl das manuell aufgebrachte Lenkmoment als auch das Unterstützungsmoment über ein Ritzel in die Zahnstange eingeleitet werden. Der Servoantrieb greift dabei an der Lenkwelle an, und zwar entweder im Bereich der oberen Lenkwelle oder in der nähe des Lenkritzels. Diese Bauform ist nur für relativ leichte Kraftfahrzeuge geeignet, da bei diesen Fahrzeugen (Kleinwagen, Kompaktwagen) die erforderlichen Lenkmomente eher gering sind. Für größere und schwerere Kraftfahrzeuge ist ein solches Lenkgetriebe nicht geeignet. Die zu übertragenden Drehmomente im Bereich des Ritzels werden zu groß, um über einen Eingriff übertragbar zu sein. Lenkritzel können auch nicht beliebig groß gestaltet werden, da der Durchmesser des Lenkritzels auch das Übersetzungsverhältnis des Lenkgetriebes beeinflusst.

Für Fahrzeuge der sogenannten Mittelklasse, der Luxusklasse und für Geländefahrzeuge wird deshalb eine Bauform der elektrischen Servolenkung bevorzugt, bei der die Unterstützungskraft über eine zweite Verzahnung in die Zahnstange eingeleitet wird. Hier sind Lenkgetriebe bekannt, bei denen der Servoantrieb über ein zweites Lenkritzel und eine zweite Verzahnung auf die Zahnstange wirkt. Solche Lenkgetriebe sind in den Offenlegungsschriften DE 102005022867 A1, DE 102007004218 A1 und WO 2006/138209 A2 gezeigt. Diese Lenkgetriebe weisen ein relativ großes Bauvolumen auf, da der Servoantrieb separat neben dem Eingriff Lenkritzel/Zahnstange vorgesehen wird. Weiter sind aus der bereits genannten WO 2006/138209 A2 Lenkgetriebe bekannt, bei denen neben dem Eingriff des Lenkritzels ein Kugelgewinde auf der Zahnstange vorgesehen ist, das über einen Kugelgewindetrieb mit einem Servomotor verbunden ist. Hier wird die Lenkhilfskraft über das Kugelgewinde in die Zahnstange eingeleitet. Die Belastung des Lenkritzels wird dadurch reduziert. Lenkgetriebe mit einem auf die Zahnstange wirkenden Kugelgewindetrieb sind relativ teuer.

Bei beiden genannten Bauarten kommt hinzu, dass die Führung der Zahnstange im Bereich des Lenkritzels über ein Druckstück spielfrei gehalten werden muss. Auch diese Lagerung ist mit Produktionskosten verbunden und stellt in der Praxis eine mögliche Geräuschquelle dar, die unerwünscht ist. Die Druckschrift DE10341266A1 zeigt zum Beispiel ein Lenkgetriebe mit einem Antrieb der Zahnstange über zwei Ritzel, die an sich gegenüberliegenden Seiten der Zahnstange angeordnet sind. Die Ritzel greifen in zwei Zahnsegmente ein, die sich ebenfalls bezüglich der Längsachse der Zahnstange gegenüber liegen, die aber in Axialrichtung der Zahnstange so weit voneinander beabstandet sind, dass sie sich nicht überdecken. Die Ritzel können sich deshalb nicht gegeneinander abstützen. Bei diesem Lenkgetriebe ist für jedes Ritzel ein Druckstück erforderlich, insgesamt also zwei Druckstücke.

Die JP-A-58 110 373 offenbart eine gattungsgemäße Lenkung mit zwei gegensinnig drehenden Lenkritzeln.

Es ist deshalb Aufgabe der vorliegenden Erfindung, ein preisgünstig zu fertigendes Lenkgetriebe zu schaffen, das kompakte Abmessungen aufweist und dennoch die für schwere Kraftfahrzeuge erforderlichen Lenkhilfskräfte zur Verfügung stellen kann, wobei zwei Ritzel benutzt werden, ohne dass eine mechanische Überbestimmung eintritt.

Diese Aufgabe wird von einem Lenkgetriebe mit den Merkmalen des Anspruchs 1 gelöst.

Weil bei einer Kraftfahrzeuglenkung mit einem Lenkungsgehäuse, in dem eine Zahnstange längsverschieblich gelagert und zur Verschwenkung von lenkbaren Rädern eingerichtet ist, wobei die Zahnstange mit einem ersten Zahnsegment mit einem ersten Lenkritzel kämmt und das Lenkritzel über eine Lenkwelle mit einem Lenkrad drehfest verbunden ist, die Zahnstange zwei sich bezüglich der Längsachse der Zahnstange gegenüber liegende Verzahnungen aufweist, und weil zwei Lenkritzel vorgesehen sind, die an sich gegenüber liegenden Zahnsegmenten angreifen und die zur gemeinsamen, aber gegensinnigen Drehung mechanisch zwangsgekoppelt sind, kann bei gleichem Ritzeldurchmesser wie bei einer konventionellen Servolenkung mit nur einem Lenkritzel ein doppelt so hohes Drehmoment übertragen werden wobei der Fertigungsaufwand nur geringfügig höher ist. Die zusätzliche Verzahnung, die der mit der Lenkwelle verbundenen Verzahnung bezüglich der Längsachse gegenüber liegend und in Axialrichtung überlappend, vorzugsweise deckungsgleich vorgesehen ist, ermöglicht auch den Wegfall eines aufwändigen Druckstücks in der bisher bekannten Form.

Das erste Lenkritzel wird mit dem zweiten Lenkritzel zu einer gegensinnigen Drehung in einem unabhängig von der Zahnstange wirkenden Kraftfluss mechanisch zwangsgekoppelt. Zwischen dem ersten Ritzel und dem zweiten Ritzel ist wenigstens ein Federelement angeordnet, so dass über die Zwangskopplung und das Federelement eine Spielfreiheit erzielt wird, ohne dass die Nachteile einer mechanischen Überbestimmung eintreten. Die anstehenden Drehmomente können dadurch in geeigneter Weise auf die Ritzel verteilt werden. Vorzugsweise ist das Federelement eine Torsionsfeder. Die Torsionsfeder kann dabei in einfacher Weise durch einen gegenüber den angrenzenden Wellenabschnitten weniger verdrehsteifen Abschnitt in der Welle zum Antrieb zumindest eines der Ritzel gebildet sein.

Der Servoantrieb, bevorzugt ein Elektromotor, kann bei einer solchen Lenkung an der Lenkwelle, an dem mit der Lenkwelle verbundenen Lenkritzel, oder an dem zweiten Lenkritzel eingreifen. Die Kopplung der beiden Lenkritzel kann über Stirnräder oder Kegelräder erfolgen, so dass eine Zwangskopplung mit fester Drehwinkelrelation möglich ist.

Es ist besonders bevorzugt, wenn die Drehachsen der beiden sich gegenüber liegenden Ritzel in einem spitzen Winkel zu einander angeordnet sind und wenn die beiden Zahnstangensegmente, die sich an der Zahnstange bezüglich der Längsachse gegenüber liegen, in zu einander geneigten Ebenen angeordnet sind, weil auf diese Weise eine Spielfreiheit der Verzahnungseingriffe durch eine Vorspannung der Zahnstange in den eingeschlossenen Winkel hinein erzielt werden kann.

Wenn weiter die Zahnstange im Bereich der Zahnsegmente wenigstens eine Führung aufweist, die mit wenigstens einem Führungselement zur Führung der Zahnstange in Richtung der parallelen oder in einem spitzen Winkel zueinander angeordneten Drehachsen der Lenkritzel zusammenwirkt, bleiben die Lenkritzel nahezu frei von Axialkräften, das Spiel kann eingestellt werden und die Zahnstange wird präzise geführt.

Nachfolgend wird ein Ausführungsbeispiel der vorliegenden Erfindung anhand der Zeichnung näher beschrieben. Die Erfindung ist in den Figuren 3 und 5 bis 7 dargestellt. Es zeigen:
- Figur 1:: eine Kraftfahrzeuglenkung mit zwei sich gegenüber liegenden Antriebritzeln in einer perspektivischen Darstellung;
- Figur 2:: den Bereich des Lenkgetriebes aus Figur 1 in einer vergrößerten Darstellung;
- Figur 3:: das Lenkgetriebe aus Figur 2 in einer weiter vergrößerten Darstellung;
- Figur 4:: eine Ansicht des Lenkgetriebes aus Figur 3 in Richtung der Zahnstangenlängsachse;
- Figur 5:: Ein Lenkgetriebe ähnlich Figur 3 mit einem zusätzlichen Federelement in der Servomotorwelle;
- Figur 6:: eine schematische Darstellung eines Lenkgetriebes, bei dem im Kraftfluss zwischen den beiden Kegelrädern und den Ritzeln jeweils ein Federelement angeordnet ist, in einer Ansicht in Längsrichtung der Zahnstange; sowie
- Figur 7:: ein Lenkgetriebe in einer Darstellung wie in Fig. 6, wobei nur zwischen einem Ritzel und einem Kegelrad ein Federelement vorgesehen ist.

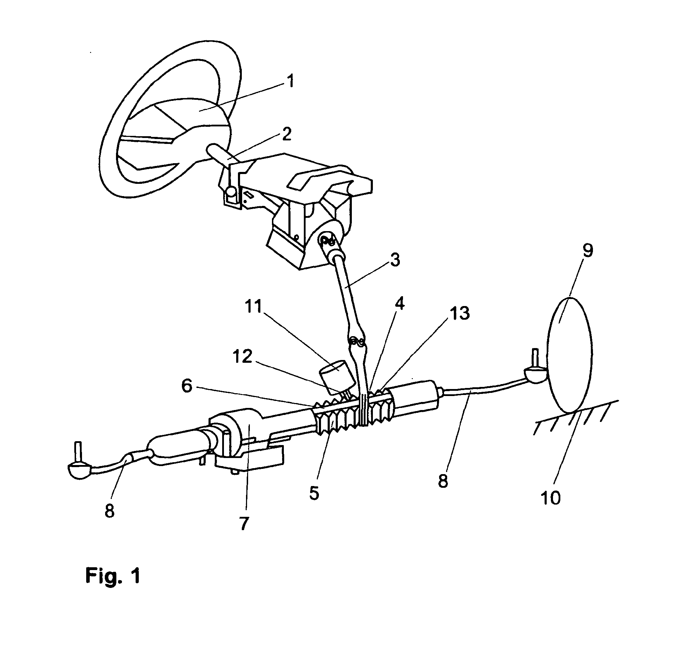

Die Figur 1 zeigt eine Lenkung für ein Kraftfahrzeug mit einem Lenkrad 1, das mit einer oberen Lenkwelle 2 und einer unteren Lenkwelle 3 drehfest gekoppelt ist. Die untere Lenkwelle 3 ist wiederum drehfest mit einem ersten Lenkritzel 4 gekoppelt. Das Lenkritzel 4 kämmt in bekannter Weise mit einem Zahnsegment 5 einer Zahnstange 6. Die Zahnstange 6 ist in einem Lenkungsgehäuse 7 in Richtung ihrer Längsachse verschieblich gelagert. An ihrem freien Ende ist die Zahnstange 6 mit Spurstangen 8 über nicht dargestellte Kugelgelenke verbunden. Die Spurstangen 8 selbst sind in bekannter Weise über Achsschenkel mit je einem gelenkten Rad 9 des Kraftfahrzeugs verbunden. Eine Drehung des Lenkrades 1 führt über die Verbindung der Lenkwelle 2 und 3 und des Ritzels 4 zu einer Längsverschiebung der Zahnstange 6 und damit zu einer Verschwenkung der gelenkten Räder 9. Die Lenkwelle 2 und/oder die Lenkwelle 3 kann durch mehrere Wellenabschnitte gebildet sein, die beispielsweise durch Gelenke und/oder Teleskopverbindungen und/oder Dämpfer miteinander verbunden sind. Die gelenkten Räder 9 erfahren über eine Fahrbahn 10 eine Rückwirkung, die der Lenkbewegung entgegen wirkt. Zum verschwenken der Räder 9 ist folglich eine Kraft erforderlich, die ein entsprechendes Drehmoment am Lenkrad 1 erforderlich macht. Ein Servomotor 11 ist vorgesehen, um dem Fahrer bei dieser Lenkbewegung zu unterstützen. Der Servomotor 1 leitet in Anhängigkeit von einer nicht dargestellten Steuerung über ein zweites Lenkritzel 12 und ein zweites Zahnsegment 13 eine Lenkhilfskraft in die Zahnstange 6 ein.

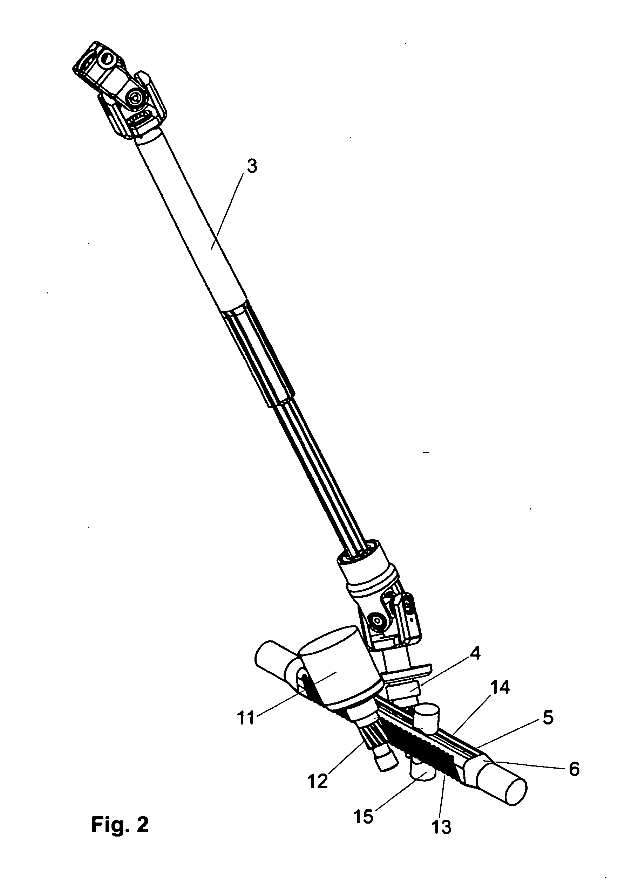

Der Getriebebereich der Lenkung aus Figur 1 ist in der Figur 2 detaillierter dargestellt. Die Zahnstange 6 ist im Bereich der sich gegenüber liegenden Zahnsegmente 5 und 13 mit einem etwa quadratischen Querschnitt versehen. Die Zahnsegmente 5 und 13 sind an zwei sich gegenüber liegenden Seitenflächen der Zahnstange 6 angeordnet. In diesem konkreten Ausführungsbeispiel sind die Zahnsegmente 5 und 13 in einem spitzen Winkel vor etwa 10° gegen einander geneigt, so dass die von den Zahnsegmenten 5 und 13 definierten Ebenen von der Lenkwelle 3 und dem Servomotor 2 gesehen auf einander zulaufen. Dementsprechend sind die Drehachsen des ersten Ritzels 4 und zweitens Ritzels 2 in einem spitzen Winkel zu einander orientiert. Die angetrieben Seiten der Lenkritzel 4 und 12, die einerseits mit der Lenkwelle 3 und andererseits mit dem Servoantrieb 11 verbunden sind, weisen einen größeren Abstand von einander auf als die freien Enden der Lenkritzel 4 und 12.

Zwischen den Zahnsegmenten 5 und 13 weist die Zahnstange 6 zwei sich gegenüber liegende Führungen 14 auf, die in Form von Längsnuten etwa über die Länge der Zehnsegmente auf der Zahnstange angebracht sind. Die Führungen 14 verlaufen etwa parallel zu den Zahnsegmenten 5 und 13. In die Führungen 14 greifen bezüglich des Getriebegehäuses ortsfest in dem Lenkgetriebe angeordnete Führungselemente 15 ein, die die Zahnstange 6 führen. Die Zahnstange 6 wird durch die Führungselemente 15 in ihrer vertikalen Ausrichtung, also in ihrer relativen Lage zu den Drehachsen der Ritzel 4 und 12 fixiert. Auf diese Weise kann das Flankenspiel des Verzahnungseingriffs zwischen dem ersten Lenkritzel 4 und dem Zahnsegment 5 sowie zwischen dem zweiten Lenkritzel 12 und dem Zahnsegment 13 auf Null eingestellt werden. Die Einstellung nutzt dabei die etwa V-förmige Orientierung der Lenkritzel 4 und 12 zu einander.

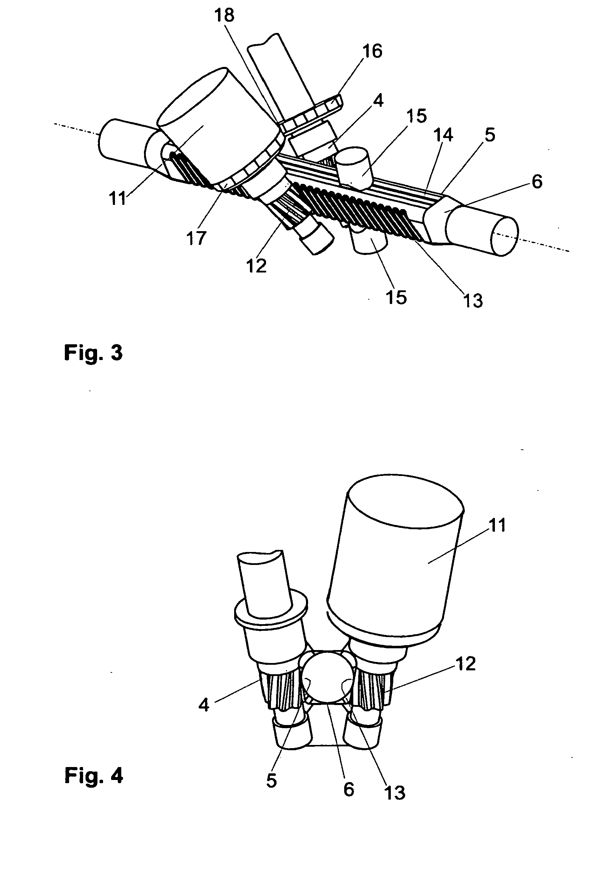

Die Figur 3 zeigt die Anordnung in einer weiter vergrößerten Darstellung. Gleiche Bauelemente sind mit gleichen Bezugsziffern versehen.

Das erste Lenkritzel 4 und das zweite Lenkritzel 12 müssen sich im Betrieb gegensinnig drehen. Eine genau synchronisierte Bewegung ist für einen präzisen Antrieb der Zahnstange 6 erforderlich. Die Synchronisierung der Drehbewegungen der Ritzel 4 und 12 soll vorzugsweise nicht über die Zahnstange 6 erfolgen, sondern über eine separate Synchronisierung. Hierzu ist in der Figur 3 nur schematisch veranschaulicht, dass das Lenkritzel 4 mit einem ersten Kegelrad 16 drehfest verbunden ist, während das zweite Lenkritzel 12 mit einem zweiten Kegelrad 17 drehfest verbunden ist. Die Kegelräder 16 und 17 stehen mit einander etwa bei der Bezugsziffer 18 in Eingriff. Sie weisen den gleichen Umfang auf, so dass die Drehwinkelgeschwindigkeit der Ritzel 4 und 12 identisch ist. Dies ist bei identisch ausgebildeten Eingriffen zwischen dem Ritzel 4 und dem Zahnsegment 5 einerseits und dem Ritzel 12 und dem Zahnsegment 13 andererseits erforderlich. Es kann in anderen Ausführungsformen auch vorgesehen sein, dass die Verzahnungseingriffe zu beiden Seiten der Zahnstange 6 unterschiedlich ausgebildet sind, insbesondere die beiden Ritzel einen unterschiedlichen Umfang oder Wälzkreis aufweisen. Dann muss die Synchronisierung über entsprechend angepasste Kegelräder oder andere Synchronisierungsmittel erfolgen.

Die Figur 4 zeigt schließlich eine schematische Ansicht der Lenkgetriebes, bei der die Längsachse und Bewegungsrichtung der Zahnstange 6 senkrecht auf der Zeichenebene steht. Bei einer besonderen Ausgestaltung der Verzahnungseingriffe zwischen dem ersten Lenkritzel 4 und dem ersten Zahnsegment 5 sowie zwischen dem zweiten Lenkritzel 12 und dem zweiten Zahnsegment 13 kann auf weitere Führungsmittel für die Zahnstange 6 verzichtet werden. Die Verzahnungseingriffe bewirken dann selbst aufgrund der Winkelstellung der Drehachsen der Ritzel 4 und 12 die Spielfreiheit des Getriebes.

Eine bevorzugte Ausführungsform des Getriebes nach den Figuren 2 und 3 sieht vor, dass das Kegelrad 16 mit dem ersten Lenkritzel 4 starr in dem Getriebegehäuse gelagert und mit dem Lenkritzel 4 verbunden ist, während die Lagerung des zweiten Kegelrades 17 und des zweiten Lenkritzels 12 ist in engen Grenzen beweglich ausgeführt, so dass ein variabler Achsabstand zwischen dem Lenkritzel 4 und dem Lenkritzel 12 gewährleistet ist. Durch geeignete Anfederung kann dann das dargestellte Getriebe spielfrei gehalten werden. Die bei der Fertigung einzuhaltenden Toleranzen werden dadurch vergrößert, was die Fertigung vereinfacht.

Im bevorzugten Fall weist die Kraftfahrzeuglenkung eine Führungseinrichtung 15 zur Führung der Zahnstange auf, die die Längsverschiebung der Zahnstange 6 zur Verschwenkung der Räder 9 führt. Diese Führungseinrichtung 15 ist bevorzugt derart ausgebildet, dass sie eine elastische Vorspannkraft auf die Zahnstange ausübt, um den Eingriff der beiden Verzahnungen der jeweiligen Zahnsegmente 5 und 13 mit den Verzahnungen der beiden Lenkritzel 4 und 12 unter Vorspannung zu bringen und damit Spiele zu verringern. Denkbar und möglich ist es auch, die Vorspannung während der Montage der Einrichtung einzustellen, indem die Führungseinrichtung 15 entsprechend positioniert wird.

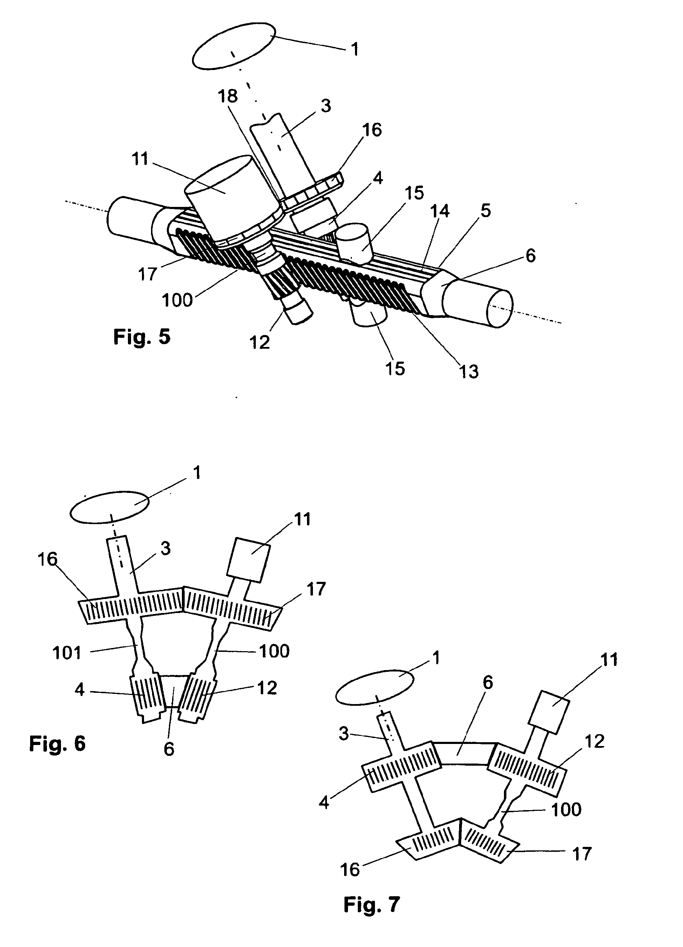

Die Figur 5 zeigt eine weiter bevorzugte Ausführungsform der Erfindung, bei der der grundsätzliche Aufbau mit der Beschreibung zu Figur 3 übereinstimmt. Ergänzend ist im Momentenfluss zwischen dem Servomotor 11 und dem zweiten Lenkritzel 12 ein Federelement 100 vorgesehen, das als Torsionsfeder ausgeführt ist. Das Federelement 100 ermöglicht entsprechend seiner Federkonstante eine relative Verdrehung des Ritzels 12 gegenüber der Welle des Servomotors 11 in Abhängigkeit von dem anliegenden Drehmoment. Im Betrieb bewirkt das Federelement 100, dass nur eines der beiden Ritzel 4, 12 in Eingriff mit der Zahnstange 6 steht, solange das auf das Federelement 100 wirkende Drehmoment gering ist. Erst mit steigendem Drehmoment kommt auch das andere Ritzel in Eingriff.

Im Einzelnen kann das Lenkgetriebe nach Figur 5 so ausgelegt sein, dass das mit der Lenkwelle 3 verbundene Lenkritzel 4 im Ruhezustand nicht im Eingriff mit dem Zahnsegment 5 steht. Die Kegelräder 16 und 17, die die Lenkwelle 3 und die Motorwelle des Servomotors 11 koppeln, sind in spielfreiem Eingriff, ebenso das zweite Ritzel 12 und das zweite Zahnsegment 13. Bei einer Drehung des Lenkrades mit geringem Drehmoment und bei geringer Unterstützungsleistung des Servomotors 11 erfolgt also der Kraftfluss von der Lenkwelle 3 über die Kegelräder 16 und 17 auf die Motorwelle und dann über das Ritzel 12 auf das Zahnsegment 13. Das Ritzel 4 ist nicht im Eingriff mit der Zahnstange.

Wird ein höheres Drehmoment ausgeübt, so tordiert das Federelement 100. Das Ritzel 12 eilt dann gegenüber der Motorwelle nach. Dadurch verändert sich auch die Position der Zahnstange und insbesondere des Zahnsegments 5 gegenüber dem Ritzel 4, welches fest mit der Lenkwelle 3 gekoppelt ist. Bei hinreichend hohem Drehmoment wird die Positionsveränderung so groß, dass das Ritzel 4 mit dem Zahnsegment 5 in Eingriff kommt. Nun können höhere Momente und Kräfte übertragen werden, da beide Verzahnungen im Eingriff stehen. Beide Verzahnungseingriffe sind aufgrund der Vorspannung, die durch das Federelement 100 bewirkt wird, spielfrei.

Es sei angemerkt, dass das Federelement 100 nicht zu verwechseln ist mit einem Drehstab, wie er in den üblichen Drehmomentsensoren und Drehschieberventilen von Servolenkungen verwendet wird. Diese Drehstäbe weisen eine geringere Federkonstante auf und erlauben eine größere relative Verdrehung. Das Federelement 100 ist hingegen drehsteifer. Die durch dieses Federelement 100 ermöglichte Relativbewegung zwischen dem Ritzel 4 und dem Zahnsegment 5 liegt im Bereich von 0,01 bis 0,1 mm.

Die Figur 6 zeigt in einer schematischen Darstellung eine mögliche Anordnung von Federelementen. Die Darstellung ist dabei so gewählt, dass die Längsachse der Zahnstange 6 senkrecht zur Zeichenebene steht.

Das Lenkrad 1 ist drehfest mit dem Kegelrad 16 verbunden. Ein Federelement 101 ist zwischen dem Kegelrad 16 und dem dazu koaxialen Ritzel 4 vorgesehen. Es handelt sich bei dem Federelement 101 bevorzugt um eine Torsionsfeder. Das Ritzel 4 kämmt mit dem Zahnsegment 5 der Zahnstange 6. Das Kegelrad 16 kämmt mit dem zweiten Kegelrad 17, welches mit der Motorwelle des Servomotors 11 drehfest verbunden ist. Zwischen dem Kegelrad 17 und dem Ritzel 12 ist das Federelement 100 angeordnet. Auch das Federelement 100 ist bevorzugt eine Torsionsfeder. Das Ritzel 12 kämmt wiederum mit dem Zahnsegment 13, das dem Zahnsegment 5 gegenüber liegt und das in Axialrichtung mit dem Zahnsegment 5 überlappt, vorzugsweise deckungsgleich angeordnet ist.

Konstruktiv kann bei dieser Anordnung vorgesehen sein, dass in jedem der drei Verzahnungseingriffe Spiel auftreten kann. Dies macht die Fertigung des Getriebes besonders einfach und kostengünstig.

Im Betrieb wird im Kraftfluss bei einem geringen Drehmoment nur eines der beiden Ritzel 4 und 12 im Eingriff mit dem zugeordneten Zahnsegment 5 bzw. 13 stehen. Es sind also die zwei folgenden Fälle zu unterscheiden:
1.: Das Ritzel 4 ist im Eingriff mit dem Zahnsegment 5. In diesem Fall besteht ein geringes Spiel zwischen den Kegelrädern 16 und 17 sowie am Eingriff des Ritzels 12 im Zahnsegment 13. Bei steigendem Drehmoment tordiert das Federelement 101. Das Kegelrad 16 kommt mit dem Kegelrad 17 in Kontakt und das bis dahin momentenfreie Ritzel 12 wird in Axialrichtung der Zahnstange 6 gegen die Flanken des Zahnsegments 13 gedrängt. Bei hinreichender Torsion des Federelements 101 stehen dann beide Ritzel 4 und 12 mit dem jeweils zugeordneten Zahnsegment 5 bzw. 13 im Eingriff. Es kann ein höheres Drehmoment übertragen werden und alle Verzahnungseingriffe sind spielfrei.
2.: Das Ritzel 12 steht mit dem Zahnsegment 13 in Eingriff und wird über die Kegelräder 16 und 17 mit Drehmoment aus der Lenkwelle 3 beaufschlagt. Das Ritzel 4 hat Spiel. In diesem Fall tordiert mit zunehmendem Drehmoment das Federelement 100, so dass sich z.B. die Lenkwelle 3 mit dem lastfreien Ritzel 4 drehen kann, während das Ritzel 12 und damit auch die Zahnstange 6 ruhen. Diese Drehbewegung des Ritzels 4 kann so lange erfolgen, bis seine Flanken in Eingriff mit dem Zahnsegment 5 kommen. Ab diesem Moment wird das Drehmoment über beide Ritzel übertragen.

Es ist bei diesem Ausführungsbeispiel also nicht zwingend erforderlich, dass konstruktiv ein bestimmter Verzahnungseingriff stets spielfrei ist. Vielmehr können sich durch Abnutzung, Temperatureinfluss und dergleichen die Eingriffsverhältnisse ändern, ohne dass dies die Funktion beeinträchtigen würde.

Die Figur 7 zeigt eine mögliche Ausführung mit nur einem Federelement 100, wobei die Lage der Kegelräder und der Ritzel gegenüber den anderen Ausführungsbeispielen anders ist.

Die untere Lenkwelle 3 ist über eine nicht dargestellte Mitnehmervorrichtung mit dem Ritzel 4 gekoppelt. Die Mitnehmervorrichtung erlaubt beispielsweise ein Drehspiel von +/- 6°, bevor eine drehsteife und formschlüssige Mitnahme des Ritzels 4 bei Drehung der Lenkwelle 3 erfolgt.

Weiter ist die Lenkwelle 3 drehstarr mit dem Kegelrad 16 verbunden. Das Kegelrad 16 kämmt mit dem Kegelrad 17, welches über das Federelement 100 mit der Motorwelle des Servomotors 11 verbunden ist. Das zweite Ritzel 12 ist wiederum drehstarr mit der Motorwelle gekoppelt.

Eine Drehung der Lenkwelle 3 bewirkt nun zunächst keine Drehung des Ritzels 4, jedoch eine Drehung des Kegelrades 16 und eine entsprechende gegensinnige Drehung des Kegelrades 17. Das Drehmoment führt zu einer Torsion des Federelements, das in diesem Fall mit einer Federrate von 1° / 10 Nm ausgelegt ist. Ein Drehmoment von 10 Nm führt also zu einer Torsion des Federelements 100 um 1°. Nach dieser Torsion wird das Ritzel 12 in der Drehbewegung von dem Kegelrad 17 mitgenommen und treibt die Zahnstange 6 an. Das Ritzel 4 folgt der Zahnstange 6 und verdreht sich in der Mitnehmervorrichtung frei um 1° gegenüber der Lenkwelle 3.

Wenn das Drehmoment an der Lenkwelle 3 einen Wert von 60 Nm erreicht, ist das Federelement 100 um 6° tordiert und es greift die Mitnehmervorrichtung, um das Ritzel 4 mit der Lenkwelle 3 drehstarr mitzunehmen. Ein Teil des Drehmoments der Lenkwelle 3 wird dann über das Ritzel 4 unmittelbar auf die Zahnstange 6 übertragen, während der andere Teil über die Kegelräder 16 und 17, das Federelement 100 und das Ritzel 12 auf die Zahnstange 6 wirkt. Zusätzlich wird ein Unterstützungsmoment von dem Servomotor 11 aufgebracht, das von der Motorwelle unmittelbar auf das Ritzel 12 wirkt und darüber die Zahnstange 6 zur Unterstützung der Lenkbewegung antreibt. Bei der beschriebenen Auslegung wird das Drehmoment so aufgeteilt, dass von der Lenkwelle 3 maximal 60 Nm auf das Ritzel 12 übertragen werden. Das restliche an der Lenkwelle 3 anliegende Drehmoment geht über das Ritzel 4 auf die Zahnstange. Das Ritzel 12 übertragt zusätzlich jedoch noch das Unterstützungsmoment des Servomotors 11 auf die Zahnstange. Ab einem Lenkmoment von 60 Nm ist diese Anordnung dann in allen Verzahnungseingriffen spielfrei und es kann über die Ritzel 4 und 12 sowie die zugeordneten Zahnsegmente 5 und 13 eine höhere Kraft auf die Zahnstange übertragen werden als dies mit nur einem Ritzel vergleichbarer Dimensionierung möglich wäre. Diese beispielhafte Darstellung der Verteilung der Drehmomente ist analog auch für die Ausführungsform entsprechend den Figuren 5 und 6 anwendbar.

Entsprechend den Darstellungen in den Figur 5, 6 und 7 sind die Torsionsfedern 100, 101 durch einen Wellenabschnitt gebildet, dessen Verdrehsteifigkeit geringer ist, als die Verdrehsteifigkeit der benachbarten Wellenabschnitte. Dies ist entsprechend den Darstellungen durch eine einfache Durchmesserverjüngung der Welle veranschaulicht. Denkbar und möglich ist auch der Einsatz von separaten Bauelementen, die die Torsionsfederfunktion darstellen.

Gegenüber dem Stand der Technik kann bei den dargestellten Lenkgetrieben auf ein aufwändiges Druckstück verzichtet werden. Das Druckstück würde bei einer konventionellen Zahnstangenlenkung dort angeordnet werden, wo der Eingriff zwischen dem zweiten Lenkritzel 12 und dem zweiten Zahnsegment 13 angeordnet ist. Der Wegfall des Druckstücks bringt zum Einen einen Kostenvorteil bei der Fertigung und der Montage der Lenkung mit sich. Zum Anderen wird damit eine potenzielle Geräuschquelle eliminiert.

Die vorliegende Erfindung ist nicht auf solche Ausführungsformen beschränkt, bei denen der Servoantrieb 11 unmittelbar mit dem Ritzel 12 gekoppelt ist. Vielmehr kann auch ein elektrischer Servoantrieb auf die obere Lenkwelle 2, die untere Lenkwelle 3 oder auf das Ritzel 4 wirken. Dann wird ein Teil des auf das Ritzel 4 wirkenden Drehmoments über die Verzahnung zwischen dem Kegelrad 16 und dem Kegelrad 17 oder bei parallelen Drehachsen der Ritzel über entsprechende Stirnräder auf das zweite Lenkritzel übertragen, so dass das an der Zahnstange 6 eingreifende Drehmoment über zwei Verzahnungseingriffe eingeleitet wird. Diese Bauform ermöglicht es, eine Lenkungskonfiguration mit einem Servomotor im Bereich der Lenksäule zu wählen, die besonders hohe Unterstützungsmomente aufbringen kann. Durch die Anordnung von zwei sich gegenüber liegenden Lenkritzeln 4 und 12 wird dann eine solche Lenkung auch für schwerere Kraftfahrzeuge geeignet.

In einer Weiterbildung der Erfindung ist es denkbar und möglich, zwei Servoantriebe, bevorzugt Elektromotoren, vorzusehen, von denen ein Servoantrieb (nicht in den Figuren dargestellt) direkt auf die obere Lenkwelle 2 oder die untere Lenkwelle 3 oder das Ritzel 4 einwirkt, während der zweite Servoantrieb 11 auf das zweite Ritzel 12 einwirkt.

### Bezugszeichenliste

- 1.: Lenkrad
- 2.: obere Lenkwelle
- 3.: untere Lenkwelle
- 4.: Lenkritzel
- 5.: Zahnsegment
- 6.: Zahnstange
- 7.: Lenkungsgehäuse
- 8.: Spurstangen
- 9.: Rad
- 10.: Fahrbahn
- 11.: Servomotor
- 12.: Lenkritzel
- 13.: Zahnsegment
- 14.: Führung
- 15.: Führungselement
- 16.: Kegelrad
- 17.: Kegelrad
- 100.: Federelement
- 101.: Federelement

## Patentansprüche

1. Kraftfahrzeuglenkung mit einem Lenkungsgehäuse (7), in dem eine Zahnstange (6) in Axialrichtung einer Längsachse verschieblich gelagert und zur Verschwenkung von lenkbaren Rädern (9) mit diesen wirkverbunden ist, wobei die Zahnstange (6) mit einem ersten Zahnsegment (5) versehen ist, welches mit einem ersten Lenkritzel (4) kämmt und wobei das Lenkritzel (4) über eine Lenkwelle (2, 3) mit einem Lenkrad (1) drehfest verbunden ist, und wobei die Zahnstange (6) eine zweites Zahnsegment (13) aufweist und ein zweites Lenkritzel (12) vorgesehen ist, das mit dem zweiten Zahnsegment (13) in Eingriff steht, wobei das zweite Zahnsegment (13) dem ersten Zahnsegment (4) bezüglich der Längsachse der Zahnstange (6) gegenüber und in Axialrichtung der Längsachse mit dem ersten Zahnsegment (4) überlappend angeordnet ist, wobei das erste Lenkritzel (4) mit dem zweiten Lenkritzel (12) zu einer gegensinnigen Drehung in einem unabhängig von der Zahn-stange (6) wirkenden Kraftfluss mechanisch zwangsgekoppelt ist, **dadurch gekennzeichnet, dass** in diesem Kraftfluss zwischen dem ersten Ritzel (4) und dem zweiten Ritzel (12) wenigstens ein Federelement (100, 101) angeordnet ist.

2. Kraftfahrzeuglenkung nach Anspruch 1, **dadurch gekennzeichnet, dass** das wenigstens eine Federelement (100, 101) eine Torsionsfeder ist.

3. Kraftfahrzeuglenkung nach einem der vorhergehenden Ansprüche, **dadurch gekennzeichnet, dass** ein elektrischer Servoantrieb (11) vorgesehen ist, der an der Lenkwelle (2, 3) angreift.

4. Kraftfahrzeuglenkung nach einem der vorhergehenden Ansprüche, **dadurch gekennzeichnet, dass** ein elektrischer Servoantrieb (11) vorgesehen ist, der auf das erste Lenkritzel (4) oder auf das zweite Lenkritzel (12) wirkt.

5. Kraftfahrzeuglenkung nach einem der vorhergehenden Ansprüche, **dadurch gekennzeichnet, dass** ein elektrischer Servoantrieb (11) vorgesehen ist, der an dem zweiten Lenkritzel (12) angreift.

6. Kraftfahrzeuglenkung nach einem der vorhergehenden Ansprüche, **dadurch gekennzeichnet , dass** die mechanische Kopplung der beiden Lenkritzel (4, 12) über Stirnräder oder Kegelräder (16, 17) erfolgt.

7. Kraftfahrzeuglenkung nach einem der vorhergehenden Ansprüche, **dadurch gekennzeichnet, dass** die Drehachsen der beiden sich gegenüber liegenden Lenkritzel (4, 12) in einem spitzen Winkel zu einander angeordnet sind.

8. Kraftfahrzeuglenkung nach einem der vorhergehenden Ansprüche, **dadurch gekennzeichnet , dass** die Zahnsegmente (5, 13) in zu einander geneigten Ebenen angeordnet sind.

9. Kraftfahrzeuglenkung nach einem der vorhergehenden Ansprüche, **dadurch gekennzeichnet, dass** die Zahnstange (6) im Bereich der Zahnsegmente (13) wenigstens eine Führung (14) aufweist, die mit wenigstens einem Führungselement (15) zur Führung der Zahnstange (6) in Richtung der Drehachsen der Lenkritzel (4, 12) zusammenwirkt.

## Claims

1. Motor vehicle steering system having a steering housing (7) in which a gear rack (6) is displaceably mounted in the axial direction of a longitudinal axis and to pivot steerable wheels (9) is actively connected thereto, wherein the gear rack (6) is provided with a first toothed segment (5) which meshes with a first steering pinion (4) and wherein the pinion (4) is non-rotatably connected to a steering wheel (1) by a steering shaft (2, 3) and wherein the gear rack (6) has a second toothed segment (13) and a second pinion (12) is provided which engages with the second toothed segment (13), wherein the second toothed segment (13) is arranged opposite the first toothed segment (4) with respect to the longitudinal axis of the gear rack (6) and is arranged so as to overlap the first toothed segment (4) in the axial direction of the longitudinal axis, wherein the first pinion (4) is permanently mechanically coupled to the second pinion (12) to create a rotation in the opposite direction in a flow of forces which acts independently of the gear rack (6), **characterised in that** at least one spring element (100, 101) is arranged between the first pinion (4) and the second pinion (12) in this flow of forces.

2. Motor vehicle steering system according to claim 1, **characterised in that** the at least one spring element (100, 101) is a torsion spring.

3. Motor vehicle steering system according to any one of the preceding claims, **characterised in that** an electrical servo drive (11) is provided which acts on the steering shaft (2, 3).

4. Motor vehicle steering system according to any one of the preceding claims, **characterised in that** an electrical servo drive (11) is provided which acts on the first pinion (4) or on the second pinion (12).

5. Motor vehicle steering system according to any one of the preceding claims, **characterised in that** an electrical servo drive (11) is provided which acts on the second pinion (12).

6. Motor vehicle steering system according to any one of the preceding claims, **characterised in that** the two pinions (4, 12) are mechanically coupled by spur gears or bevel gears (16, 17).

7. Motor vehicle steering system according to any one of the preceding claims, **characterised in that** the axes of rotation of the two pinions (4, 12) which oppose each other are arranged at an acute angle to each other.

8. Motor vehicle steering system according to any one of the preceding claims, **characterised in that** the toothed segments (5, 13) are arranged in planes which are inclined toward each other.

9. Motor vehicle steering system according to any one of the preceding claims, **characterised in that,** in the region of the toothed segments (13), the gear rack (6) has at least one guide (14) which cooperates with at least one guide element (15) for guiding the gear rack (6) in the direction of the axes of rotation of the pinions (4, 12).

## Revendications

1. Système de direction d'un véhicule automobile, doté d'un boîtier de direction (7), dans lequel une crémaillère (6) est logée de manière à pouvoir être déplacée en direction axiale d'un axe longitudinal, cette crémaillère (6) étant reliée activement à des roues dirigeables (9) pour le pivotement de celles-ci, auquel cas la crémaillère (6) est dotée d'un premier segment denté (5) qui s'engrène avec le premier pignon de direction (4), et auquel cas le pignon de direction (4) est relié, de manière à ne pas pouvoir tourner, via un arbre de direction (2, 3), à un volant (1) et auquel cas la crémaillère (6) présente un deuxième segment denté (13) et l'on prévoit un deuxième pignon de direction (12), lequel est en prise avec le deuxième segment denté (13), auquel cas le deuxième segment denté (13) est agencé opposé au premier segment denté (4) par rapport à l'axe longitudinal de la crémaillère (6) et est agencé par chevauchement en direction axiale de l'axe longitudinal au premier segment denté (4), auquel cas le premier pignon de direction (4) est lié par couplage mécanique forcé au deuxième pignon de direction (12) en une rotation opposée en un flux de force agissant indépendamment de la crémaillère (6), **caractérisé en ce qu'**au moins un élément ressort (100, 101) est agencé en ce flux de force entre le premier pignon (4) et le second pignon (12).

2. Système de direction d'un véhicule automobile selon la revendication 1, **caractérisé en ce qu'**au moins un élément ressort (100, 101) est un ressort de tension.

3. Système de direction d'un véhicule automobile selon une des revendications précédentes, **caractérisé en ce que** l'on prévoit une servocommande électrique (11) qui est en prise avec l'arbre de direction (2, 3).

4. Système de direction d'un véhicule automobile selon une des revendications précédentes, **caractérisé en ce que** l'on prévoit une servocommande électrique (11) qui agit sur le premier pignon de direction (4) ou sur le deuxième pignon de direction (12).

5. Système de direction d'un véhicule automobile selon une des revendications précédentes, **caractérisé en ce que** l'on prévoit une servocommande électrique (11) qui est en prise avec le deuxième pignon de direction (12).

6. Système de direction d'un véhicule automobile selon une des revendications précédentes, **caractérisé en ce que** le couplage mécanique des deux pignons de direction (4, 12) a lieu à l'aide de roues d'engrenage cylindriques ou roues d'engrenage coniques (16, 17).

7. Système de direction d'un véhicule automobile selon une des revendications précédentes, **caractérisé en ce que** les axes de rotation des deux pignons de direction (4, 12), gisant opposés l'un à l'autre, sont agencés en un angle aigu l'un par rapport à l'autre.

8. Système de direction d'un véhicule automobile selon une des revendications précédentes, **caractérisé en ce que** les segments dentés (5, 13) sont agencés dans des plans étant appropriés l'un à l'autre.

9. Système de direction d'un véhicule automobile selon une des revendications précédentes, **caractérisé en ce que** la crémaillère (6) présente, dans la zone des segments dentés (13), au moins un guidage (14) qui coopère avec au moins un élément de guidage (15) afin de guider la crémaillère (6) en direction de l'axe de rotation du pignon de direction (4, 12).
